(19) Europäisches Patentamt
European Patent Office
Office européen des brevets

(11) EP 3 058 556 B1

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **14808813.1**

(22) Anmeldetag: **18.10.2014**

(51) Int Cl.:
***G08B 17/00*** (2006.01) ***G08B 17/12*** (2006.01)
***G08B 29/18*** (2006.01)

(86) Internationale Anmeldenummer:
**PCT/DE2014/000520**

(87) Internationale Veröffentlichungsnummer:
**WO 2015/055168 (23.04.2015 Gazette 2015/16)**

(54) **VERFAHREN UND VORRICHTUNG ZUR AUTOMATISIERTEN WALDBRANDFRÜHERKENNUNG MITTELS OPTISCHER DETEKTION VON RAUCHWOLKEN**

METHOD AND DEVICE FOR THE AUTOMATED EARLY DETECTION OF FOREST FIRES BY MEANS OF THE OPTICAL DETECTION OF CLOUDS OF SMOKE

PROCÉDÉ ET DISPOSITIF DE DÉTECTION RAPIDE AUTOMATISÉE D'INCENDIES DE FORÊT AU MOYEN D'UNE DÉTECTION OPTIQUE DE NUAGES DE FUMÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2013 DE 102013017395**

(43) Veröffentlichungstag der Anmeldung:
**24.08.2016 Patentblatt 2016/34**

(73) Patentinhaber: **Iq Wireless Gmbh Entwicklungsgesellschaft Für Systeme und Technologien der Telekommunikation**
**12489 Berlin (DE)**

(72) Erfinder:
- **JÄCKEL, Klaus**
  **12529 Schönefeld (DE)**
- **JOCK, Andreas**
  **15834 Rangsdorf (DE)**
- **KRANE, Uwe**
  **14165 Berlin (DE)**
- **NOWZAD, Azarm**
  **10787 Berlin (DE)**
- **VOGEL, Holger**
  **13156 Berlin (DE)**

(74) Vertreter: **Scholz, Hartmut et al**
**Handjerystrasse 20**
**12159 Berlin (DE)**

(56) Entgegenhaltungen:
**DE-A1- 19 603 828 DE-A1- 19 834 597**
**US-A1- 2006 115 154 US-A1- 2012 148 148**
**US-A1- 2013 094 699 US-A1- 2014 099 020**

- **HAM SUNJAE ET AL: "Vision based forest smoke detection using analyzing of temporal patterns of smoke and their probability models", IMAGE PROCESSING: MACHINE VISION APPLICATIONS IV, SPIE, 1000 20TH ST. BELLINGHAM WA 98225-6705 USA, Bd. 7877, Nr. 1, 10. Februar 2011 (2011-02-10), Seiten 1-7, XP060006037, DOI: 10.1117/12.871995 [gefunden am 2011-02-07]**
- **ARRUE B C ET AL: "AN INTELLIGENT SYSTEM FOR FALSE ALARM REDUCTION IN INFRARED FOREST-FIRE DETECTION", IEEE INTELLIGENT SYSTEMS, IEEE SERVICE CENTER, NEW YORK, NY, US, 1. Mai 2000 (2000-05-01), Seiten 64-73, XP000957357, ISSN: 1094-7167, DOI: 10.1109/5254.846287**
- **CHAO-CHING HO ET AL: "Real-time video-based fire smoke detection system", ADVANCED INTELLIGENT MECHATRONICS, 2009. AIM 2009. IEEE/ASME INTERNATIONAL CONFERENCE ON, IEEE, PISCATAWAY, NJ, USA, 14. Juli 2009 (2009-07-14), Seiten 1845-1850, XP031523989, DOI: 10.1109/AIM.2009.5229791 ISBN: 978-1-4244-2852-6**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- JOON YOUNG KWAK ET AL: "Forest Smoke Detection Using CCD Camera and Spatial-temporal Variation of Smoke Visual Patterns", COMPUTER GRAPHICS, IMAGING AND VISUALIZATION (CGIV), 2011 EIGHTH INTERNATIONAL CONFERENCE ON, IEEE, 17 August 2011 (2011-08-17), pages 141-144, XP032064386, DOI: 10.1109/CGIV.2011.40 ISBN: 978-1-4577-0981-4
- Chen-Yu Lee ET AL: "Smoke detection using spatial and temporal analysis", International Journal of Innovative Computing, Information and Control, 1 July 2012 (2012-07-01), XP055661887, Retrieved from the Internet: URL:http://www.ijicic.org/ijicic-11-03010. pdf [retrieved on 2020-01-27]

## Beschreibung

Die Erfindung betrifft ein Verfahren zur automatisierten Waldbrandfrüherkennung mittels optischer Detektion von Rauchwolken.

Waldbrände stellen ein besonderes Risikopotential in Bezug auf ökonomische und ökologische Auswirkungen und Schäden dar. Wenn derartige Brände schon nicht vollständig verhindert werden können, so spielt doch deren frühzeitige Erkennung eine außerordentlich große Rolle bei der Schadenseindämmung. Während in vergangenen Jahrzehnten insbesondere menschliche Beobachtungsposten eingesetzt wurden, gibt es mehr und mehr Ansätze, durch geeignete technische Lösungen die Unzulänglichkeiten und aufwendige menschliche Beobachter zu reduzieren.

Trotz intensiver weltweiter Fokussierung der Forschungsarbeiten auf die benannte Thematik sind kommerziell anwendbare technische Systeme derzeit wenig im Einsatz. Von einer Vielzahl untersuchter, grundsätzlich verschiedener Verfahren werden derzeit hauptsächlich optische Verfahren mit Raucherkennung, die in terrestrischen Systemen implementiert und von exponierten Standorten in Waldgebieten (Türmen u. ä.) betrieben werden, eingesetzt.

Im Vergleich zu anderen technischen Ansätzen wie Satelliten gestützten Verfahren und solchen Verfahren, die auf der Detektion anderer physikalischer Größen des Brandes (z.B. Wärme- oder Infrarotstrahlung, Partikel) spielen sie aber eine hervorragende Rolle.

Die beschriebene Systemlösung mit optischen Sensoren und Computer gestützter Bildverarbeitung zur automatischen Rauchdetektion zeichnet sich gegenüber den anderen Lösungsansätzen vor allem dadurch aus, dass beginnende Brände sehr frühzeitig entdeckt werden können, bei denen die Wärmeentwicklung noch sehr klein ist und eine kostengünstige Detektion erreichbar ist, da von einer Detektionseinheit an einem Standort eine Waldfläche von mehreren 100 $km^2$ überwacht werden kann und trotzdem Detektionszeiten von wenigen Minuten realisierbar sind. Dadurch sind entsprechende Systeme bereits heute den traditionellen menschlichen Beobachtern ebenbürtig.

Für eine umfassende praktische Anwendung weisen die verfügbaren optischen Systeme mit automatischen Verfahren zur Rauchdetektion jedoch einen entscheidenden Nachteil auf, der in ihrer hohen Fehlalarmrate besteht, d.h. der positiven Rauchdetektion auch ohne tatsächlichen Waldbrand, z.B. durch Wolkenschatten, Staubaufwirbelungen u. ä. Dieser Nachteil muss durch einen menschlichen Operator (Supervisor) ausgeglichen werden, der eine entsprechend automatisch detektierte Waldbrandsituation anhand von Bilddaten und Erfahrungswerten überprüft und dann eine finale Entscheidung zum weiteren Vorgehen (Alarmierung der Löschkräfte oder Ignorierung der Meldung) treffen muss.

Diese vergleichsweise hohe Fehlalarmrate führt in der Praxis zu einer starken psychischen Belastung des Bedienpersonals, da die Anzahl der Fehlalarme meist deutlich größer als die Meldungen für tatsächliche Brände ist, relativ hohen Personalkosten, da ein Operator nur eine kleinere Anzahl von automatisiert arbeitenden optischen Systemen parallel bewerten und kontrollieren kann, einem Akzeptanzproblem für den Einsatz der automatisierten Systeme, da trotz objektiv gleichwertiger oder besserer Detektionsergebnisse als bei menschlicher Beobachtung, deren subjektive Wahrnehmung und Bewertung eine andere ist.

Die bisher bekannten Ansätze zur Reduzierung der Fehlalarmrate gehen in erster Linie davon aus, dass durch entsprechende Bildverarbeitungsroutinen mehrere unabhängige Merkmale von Rauch extrahiert und bewertet werden. Durch geeignete Kombination dieser Ergebnisse wird die Entscheidungssicherheit verbessert.

Bekannt geworden sind u. a. folgende Merkmale und Eigenschaften des Rauches, die durch intelligente Bildverarbeitung entsprechend ausgewertet werden. So sind Helligkeitsunterschiede zur Umgebung, teilweise mit adaptiven Schwellenwerten, in der US 7,542,585 B2 beschrieben sind. Ferner wird die Messung selbst ähnliche Konturen in der DE 10 2009 048 739 B3 beschrieben, die ein Verfahren und eine Vorrichtung zur automatischen Waldbranderkennung betreffen. Ferner sind zeitliche und räumliche Vorzugsrichtungen ("Rauch steigt nach oben" bzw. "Rauch breitet sich in allen Richtungen aus - im Gegensatz zu ziehenden Wolken") z.B. in der EP 1 994 502 B1 für ein Verfahren und Vorrichtung zur Raucherkennung beschrieben.

Derartige räumliche und zeitliche Clusteranalysen, sind in der EP 1 628 260 B1 beschrieben. Ferner sind Bestimmung und Auswertung niederfrequenter Helligkeitsschwankungen durch Fourier-Transformationen und Frequenzanalysen Gegenstand der US 6,937,743 B2.

Aus der Druckschrift US2013/094699 A1 ein Verfahren zur Waldbrand-Raucherkennung beschrieben, die eine zufällige Waldklassifizierung verwendet. Bei dem Verfahren wird ein erster Referenzwert gesetzt. Für aufeinanderfolgend erfasste Rahmen werden Bilder zwischen den Rahmen verglichen, wobei jeder Block, in dem eine Anzahl von Pixeln, deren Bewegungen identifiziert wurden, gleich oder größer ist als der erste Referenzwert. Das ausgewählte Referenzbild wird mit mindestens einem anderen Bild das vor dem Referenzbild aufgenommen worden ist verglichen. Danach wird eine Vielzahl von Merkmalsvektoren aus den Referenzbildern ausgewertet und extrahiert. Die extrahierten Merkmalsvektoren werden unter Verwendung verschiedener Zufallswaldalgorithmen angelernt. Die Wahrscheinlichkeiten, die an die Endknoten für Bilder ausgegeben werden, werden akkumuliert und es werden zwei erste kumulative Wahrscheinlichkeitshistogramme erzeugt. Die beiden ersten kumulativen Wahrscheinlichkeitshistogramme werden gemittelt und dann wird ein zweites kumulatives Wahrscheinlichkeitshistogramm erzeugt.

Die Druckschrift US 2006/115154 A1 beschreibt eine Vorrichtung und ein Verfahren zur Brand- und Rauchdetektion mittel einer Bilderfassungsvorrichtung. Hierzu werden Bilder von einem vorbestimmten Bereich verwendet und analysiert diese mittels einer farbmodellbasierten Farb- und Störungsmessung der RGB (Rot, Grün, Blau), um Feuerpixeln und Rauchpixeln zu erkennen. Die extrahierten Pixel werden in ein Feuermelde-Fuzzy-Alarmsystem eingegeben, um eine Ausgabe von Alarminformationen zu erzeugen.

Die Nichtpatentliteratur "Vision based forest smoke detection using analyzing of temporal patterns of smoke and their probability models", Ham Sunjyae et al., Image processing machine vision applications IV, SPIE 100 20th St. Bellingham WA 98225-6705 USA, Bd. 7877, Nr.1, 10. Februar 2011, beschreibt die Verwendung von Wahrscheinlichkeitsfunktionen zur Auswertung von mit CCD Kameras aufgenommen Bildern.

Aus der Nichtpatentliteratur "An intelligent system for false alarm reduction in infrared forest-fire detection", Arrue B C et al, IEEE Intelligence Systems, IEEE Service Center, New York, NY, US, wird beschrieben wie in einem FAR System die Informationen miteinander kombiniert werden können. Das FAR System kombiniert Computer mit einem Netzwerk und einem nach den Fuzzyregeln arbeitenden Expertensystem, um Waldbrände mithilfe von Infrarotaufnahmen identifizieren zu können.

Für die Auswertung und Kombination der einzelnen Merkmale und Parameter des zu detektierenden Rauches in den Bildern werden Mehrheitsentscheide, Bewertungstabellen und auch neuere Verfahren wie Künstliche Neuronale Netzwerke und Fuzzy-Logic vorgeschlagen und genutzt.

Die optischen Sensoren sind in der Regel als Schwarz-Weiß-Detektoren ausgeführt, die keine Farbinformationen detektieren. Schwarz-Weiß-Sensoren sind empfindlicher und konturenschärfer als vergleichbare farbtüchtige Sensoren; dazu kommt, dass die Bilder weniger aufwändig zu prozessieren sind. Über große Entfernungen ab ca. 5 Kilometern gehen durch atmosphärische Effekte die Farbinformationen weitgehend verloren, so dass bei angestrebten großen, von einem Sensor zu überwachenden Gebieten nur bei Teilbereichen die Farbinformationen auswertbar wären.

Die Nutzung von Farbsensoren und die automatisierte Verarbeitung und Auswertung von Farbinformationen und Farbbildern zum Zweck der Rauchdetektion sind grundsätzlich bekannt. Die Sensoren nehmen dabei Intensitätswerte in drei unabhängigen Farbkanälen z.B. rot, grün, blau (RGB-Raum) für jeden Pixel auf und prozessieren die entsprechenden Daten. Dieser dreidimensionale Farbraum kann auch durch entsprechende Funktional-Transformationen gewandelt werden. Ein häufig benutzter Farbraum ist dabei der so genannte HSV-Raum, der den Farbwert H als Winkel zwischen 0° = rot, 120° = grün, 240° = blau, die Sättigung S zwischen 0 und 100 sowie den Hellwert V zwischen 0 und 100 vereint, und über eine entsprechende Transformation aus dem RGB-Raum gewonnen werden kann. Die dafür zugrunde liegenden Formeln sind allgemein bekannt.

Die Farbbilder werden häufig sowohl auf das Vorhandensein von offenem Feuer bzw. Flammen als auch Rauch ausgewertet. Die Auswertung von Farbbildern in Bezug auf die Detektion von Rauch konzentriert sich dabei auf folgende Merkmale und Parameter:
der Kontrast in den Bildern wird ausgemessen und bei Unterschreiten eines Schwellenwertes in bestimmten Bereichen als Vorhandensein von Rauch interpretiert, wie dies beispielweise aus der US 4,614,968 bekannt ist. Diese Kontrastanalyse setzt aber nicht notwendigerweise ein Farbbild voraus; es erfolgt eine (relativ grobe) Vorklassifizierung als Rauch, wenn die Pixel bestimmter Bildbereiche in jedem Farbkanal oder der Farbsättigung innerhalb vordefinierter Schwellenwerte liegen. Dieser Vorklassifizierung liegt zugrunde, dass Rauch wenig ausgeprägte individuelle Farbbestandteile aufweist. Allerdings ist diese Vorklassifizierung sehr unzuverlässig, so dass die eigentliche Entscheidung dann durch Auswertung weiterführender Strukturanalysen wie oben beschrieben erfolgen muss.

Eine Anwendung der Fuzzy-Logic bei der Zusammenfassung der Ergebnisse von separaten Verfahren für die Flammen- und Raucherkennung in Farbbildern ist ebenfalls in der US 7,542,585 B2 beschrieben. Allerdings beschränkt sich diese Anwendung auf die Kombination und gewichtete Bewertung der Ergebnisse von getrennten, in sich abgeschlossenen Algorithmen zur Feuererkennung.

Einige der bisherigen Verfahren werten nur eine Farbinformation aus, nämlich den Farbwert (H) bzw. den Weißanteil bestimmter Bildbereiche (Hellwert (V). Hier wird lediglich die Eigenschaft des Rauches genutzt, Farbanteile des Hintergrunds zu dämpfen bzw. selbst einen hohen Weißanteil zu besitzen.

Eine Aufgabe der vorliegenden Erfindung ist es ein Verfahren zur automatisierten Waldbrandfrüherkennung im Überwachungsnahbereich mittels optischer Detektion von Rauchwolken zur Verfügung zu stellen.

Diese Aufgabe wird mittels der in dem Anspruch 1 genanten Merkmale gelöst, insbesondere durch die Aufnahme von Bildern mittels einer Farbbildkamera und Übermittlung dieser an eine digitale Datenverarbeitungsmedium und Definieren von Zugehörigkeitsfunktionen in einem Fuzzy-Logic-System zu Gebietsklassen wie den Klassen "Rauch", "Wald" und "dunkle Fläche" durch Auswertung einer Vielzahl von durch die Farbbildkamera aufgenommenen Testbildern bzw. Testsequenzen in Bezug auf den Sättigungswert der Bildpixel.

Gemäß der Erfindung werden sodann Zugehörigkeitsfunktionen in einem Fuzzy-Logic-System zu Gebietsklassen wie den Klassen "Rauch", "Wald" und "Himmel" durch Auswertung einer Vielzahl von Testbildern bzw. Testsequenzen in Bezug auf den Hellwert der Bildpixel definiert und sodann ein Schwellenwert für die Klassifizierung als "Rauch" durch Auswertung einer Vielzahl von Testbildern bzw. Testsequenzen in Bezug auf den Farbwert der Bildpixel definiert.

Ferner wird ein Fuzzy-Logic-Regelwerk für den S-Kanal (Sättigung) und V-Kanal (Hellwert) aufgrund der durchgeführten Untersuchungen definiert, die dafür die qualitativen Regeln benennen, welche Parameterkombination als "Rauch" gewertet wird und welche nicht.

Es werden die nachfolgend beschriebenen Prozeduren durchgeführt, die auf den gesamten Bildinhalt oder auf einen eingeschränkten Bereich, die so genannte Region of Interest (ROI) angewandt werden, wenn aufgrund anderweitig gewonnener Erkenntnisse nur in diesen Bereichen Rauch auftreten kann, nämlich:

- Ermitteln einer Fuzzyfunktion und Zugehörigkeitsfunktion mit konkreten Zahlenwerten für die Einordnung in die entsprechenden Parameterkombinationen für jeden der beiden Kanäle S und V anhand einer Vielzahl von Bildern und Szenarien;
- Ermitteln des Schwellenwertes dieser Fuzzyfunktion für die Klassifizierung eines Bildpixels als "Rauch" und Ermittlung des Schwellenwertes für Anzahl derart klassifizierter Bildpixel eines ROI anhand einer Vielzahl von Bildern und Szenarien, um einen Brandalarm zu generieren.

Durchführung der folgenden Verfahrensschritte für jedes aufgenommene Bild:

o Einteilen der mit einer digitalen Farbbildkamera aufgenommenen und zu analysierenden Farbbilder in Bereiche, die für die weitere Untersuchung interessant sind (ROI);
o Vorklassifizierung dieser potenziellen interessanten Bereiche (ROI) in denen Rauch sein könnte;
o hierzu Überführen aller einzelnen Pixel in der ROI in den HSV-Raum und Analysieren aller Pixel in diesem HSV-Raum;
o Analyse der Pixel zunächst für den H-Kanal (Farbwert), Vergleich mit dem Schwellenwert für die Klassifizierung als "Rauch" und Durchführung der folgenden Verfahrensschritte, falls der Schwellenwert überschritten wird und Klassifizierung als "kein Rauch" sowie Analyse des nächsten Bildpixels innerhalb des ROI, falls der Schwellenwert nicht überschritten wird;
o Ermitteln der Zugehörigkeitsfunktionswerte für den S-Kanal (Sättigung) und V-Kanal (Hellwert) in Bezug auf die definierten Klassen;
o Bestimmen der Fuzzyfunktion für den Bildpixel, Vergleich mit dem Schwellenwert für die Klassifizierung als "Rauch", falls der Schwellenwert überschritten wird und Klassifizierung als "kein Rauch", falls der Schwellenwert nicht überschritten wird, sowie Übergang zur Analyse des nächsten Bildpixels innerhalb des ROI;
o Summation der Anzahl aller Bildpixel, die als "Rauch" klassifiziert wurden, über die gesamte interessierende Fläche (ROI);
o falls mindestens eine vordefinierte Anzahl der untersuchten Pixel der betreffenden Region als "Rauch" bestimmt wurden, wird "Rauch" gemeldet und der Bildbereich der entsprechende Region gekennzeichnet, in dem er auftritt;
o Auslösen eines Brandalarms.

Erfindungsgemäß werden weitere Kriterien und Parameter aus den Farbbildern abgeleitet, da 3 Farbkanäle detektiert werden. Hierbei wurde durch intensive Untersuchungen festgestellt, dass je nach Hintergrund des Rauches unterschiedliche Schwellenwerte und Regeln anzuwenden wären. Diese Zusammenhänge sind nicht exakt determiniert, sondern besser durch heuristische Regeln zu beschreiben.

Im Folgenden werden dazu die gefundenen Zusammenhänge beschrieben sowie die Vorrichtung und das Verfahren zur Raucherkennung vorgestellt.

Als günstig hat sich dabei eine Darstellung im HSV-Farbraum (H = Farbwert, S = Farbsättigung, V = Hellwert) erwiesen. Die Abkürzung HSV leitet sich aus den englischen Begriffen für H = Hue, S = Saturation und V = Value ab.

Über Verknüpfungen von Hellwert und Sättigungswert unter Berücksichtigung eines a priori bekannten Hintergrundes (z.B. dunkle Waldfläche oder heller Himmel) lassen sich über geeignete Koeffizienten und deren Parametrisierung dann Wahrscheinlichkeitsaussagen über eine mögliche Klassifizierung der Pixel als Rauch vornehmen. Auch der Farbwert ist dabei als Ausschlusskriterium zu berücksichtigen, da ein entsprechender Rauchpixel aus einem begrenzten H-Bereich (H = Farbwert) kommen muss.

Aufgrund der Komplexität dieser Zusammenhänge ist eine Abbildung dieser Verknüpfung über einfache funktionale Zusammenhänge nicht möglich. Mittels einer Fuzzy-Logic können jedoch unscharfe und nicht streng beschreibbare Zusammenhänge gut abgebildet und vergleichsweise einfach parametrisiert werden.

Die durch langwierige Versuche an einer Vielzahl von unterschiedlichen Bildszenarien gefundenen Zusammenhänge sind in den nachfolgenden Ablaufplänen und Charts dargestellt.

In einer bevorzugten Ausführungsform der vorliegenden Erfindung werden die Umgebungsbedingungen des Betriebs permanent ermittelt und in Abhängigkeit davon die Schwellenwerte und Zugehörigkeitsfunktionen adaptiv angepasst.

Gemäß einer weiteren Ausführungsform der vorliegenden Erfindung werden durch laufende Auswertung der Ergebnisse des automatischen Verfahrens zur Detektion mit tatsächlichen Brandereignissen und/oder nicht detektierten Brandereignissen die Schwellenwerte und Zugehörigkeitsfunktionen durch systemübergreifende Rückkopplung und Neuberechnung adaptiv angepasst.

Des Weiteren kommen zur Vorklassifizierung der potentiellen interessanten Bereich (ROI), in denen Rauch sein könnte, Verfahren zur Georeferenzierung zum Einsatz, wobei die Kamera die Kameraposition in ihrer räumlichen Lage und Ausrichtung mit Hilfe entsprechender Sensortechnik bestimmt werden kann und ein Abgleich der Bildbereiche mit entsprechenden topographischen Daten und Geländemodellen dahingehend erfolgt, so dass hierdurch die ROI auf vorab definierte Bereiche eingeschränkt bzw. entsprechende Bereiche ausgeschlossen werden, sowie zur Definition von Gebietsklassen genutzt werden können.

Gemäß einer weiteren Ausführungsform der vorliegenden Erfindung, erfolgt die Implementierung des Verfahrens und deren Algorithmen über mindestens ein digitales Datenverarbeitungsmedium, das geeignet ist, die Bilddaten zu verarbeiten.

In einer bevorzugten Ausführungsform der vorliegenden Erfindung können die analysierten digitalen Bilder auf mindestens einen, mit dem digitalen Datenverarbeitungsmedium verbundenen, Bildschirm wiedergegeben werden, wobei die Kennzeichnung entsprechend detektierter Rauchgebiete mit geeigneten Mitteln erfolgen und auf dem Bildschirm angezeigt werden kann.

Dabei können die geeigneten Mittel eine Umrandung, eine farbliche Hinterlegung oder eine stilistische Markierung der detektierten Rauchgebiete sein.

Gemäß einer weiteren Ausführungsform der vorliegenden Erfindung sind das digitale Datenverarbeitungsmedium und der Bildschirm mittels mindestens einer Funkdatenverbindung miteinander koppelbar, wobei der Bildschirm einem Mobilfunktelefon oder einem Tablet-PC zugeordnet sein kann, die für den Empfang und die Verarbeitung der von dem digitalen Datenverarbeitungsmedium generierten Datensätzen ausgebildet sind. Hierdurch können die Datensätze von mobil abgerufen werden. Eine räumliche Stationierung eines Anwenders, beispielsweise in einem an einem Rechenzentrum angeschlossenes Auswerte- und Bewertungszentrum, kann somit entfallen.

Als digitales Datenverarbeitungsmedium sind mobile, sowie stationäre Computer als auch zur Datenverarbeitung geeignete Mobilfunktelefone denkbar. Auch ist es möglich, die von der Vorrichtung ermittelten Überwachungsdaten über ein Mobilfunknetz direkt auf einem Mobiltelefon, einem Tablet-PC, einem Klapprechner oder anderen geeigneten digitalen Datenverarbeitungsmedien über digitale (beispielsweise mittels UMTS oder LTE) Netz - Standards oder analogen Funkübertragungsmitteln zur Verfügung zu stellen.

Des Weiteren ist es vorgesehen eine Brandmeldung direkt an die Einsatzleitstellen der entsprechend zuständigen Einsatzkräfte weiterzuleiten. Ein Verwender kann so unmittelbar und in Echtzeit über eine entsprechende Brandmeldung informiert werden.

Sollte keine Brandmeldung erfolgen, kann über die oben beschriebenen Medien aber jederzeit auf die Vorrichtung zugegriffen werden, um beispielsweise Echtzeitbilder vom zu Überwachenden Bereich einzusehen.

Die Erfindung wird nachfolgend anhand beispielhafter Ausführungsformen unter Bezugnahme auf die beigefügten Zeichnungen näher erläutert; es zeigt:

**Figur 1** ein Flowchart der durchgeführten Verfahrensschritte zur automatisierten Waldbrandfrüherkennung mittels optischer Detektion von Rauchwolken;

**Figur 2** eine schematische Darstellung des analysierten Hellwertkanals mit definierten Zugehörigkeitsfunktionen zu den Gebietsklassen "Wald", "Rauch" und "Himmel";

**Figur 3** eine schematische Darstellung des analysierten Sättigungskanals mit definierten Zugehörigkeitsfunktionen zu den Gebietsklassen "Rauch", "Wald" und "dunkle Fläche".

Figur 1 ist eine Flowchart Darstellung der Arbeitsabläufe des erfindungsgemäßen Verfahrens. In einem ersten Schritt werden die konsekutiven Bilder eingelesen. Zur Darstellung werden die Grundfarben Rot, Grün, Blau genutzt (RGB).

Danach erfolgt eine Vorverarbeitungsanalyse gefolgt von einer Bewegungsdetektion. Des Weiteren erfolgt eine Bildfilterung anhand morphologischer Mathematik.

Die mit einer digitalen Kamera aufgenommenen und zu analysierenden Farbbilder werden zunächst in Bereiche eingeteilt, die für die weitere Untersuchung interessant sind - die sog. ROI (Region of Interest) - und als potenzielle Bereiche vorklassifiziert, in denen Rauch sein könnte.

Darüber hinaus können topographische Karten und Daten sowie Geländemodelle im Zusammenhang mit dem konkreten Standort der Kamera und ihrer räumlichen Ausrichtung genutzt werden, um die interessierenden Bereiche weiter einzuschränken und so den Prozessierungsaufwand und eventuelle Fehldetektionen zu reduzieren. Beispielsweise können bestimmte Bildbereiche ausgeschlossen werden, in denen tatsächliche oder vermeintliche Raucherscheinungen nicht auftreten und/oder nicht relevant sind, wie z.B. im Zusammenhang mit Verkehrsflächen, Seen, Siedlungen oder Industrieanlagen.

Zu diesem Zweck müssen die geographische Position der Kamera, ihre Installationshöhe im Zusammenhang mit den optischen Kenngrößen der Kamera (z.B. Brennweite, Sensorgröße) sowie ihre aktuelle Ausrichtung während der Bildaufnahme bekannt sein. Diese Positionsermittlung der Kamera kann über geeignete Sensoren (z.B. GPS, Kompass und Lagesensoren) auch im laufenden Betrieb ermittelt und aktuell gehalten werden. Die Zuordnung und Abbildung von kartographischen Bereichen zu den aufgenommenen Bildbereichen (Georeferenzierung) ist dann über bekannte mathematische Transformationen möglich.

Sollte sich keine ROI's ergeben, so wird das nächste konsekutive Bild eingelesen und die Suche, bzw. die Analyse auf ROI's erfolgt von neuem.

Werden ROI's erkannt, wird wie folgt weiter gegangen: innerhalb dieser ROI werden alle Pixel betrachtet und der nachfolgenden Berechnung gemäß dem beschriebenen Algorithmus unterzogen. Innerhalb dieser ROI werden alle Pixel betrachtet und der nachfolgenden Berechnung gemäß dem beschriebenen Algorithmus unterzogen.

Zunächst wird jeder einzelne Pixel dieser ROI, wenn die Pixeldaten zunächst im RGB-Raum vorliegen, mittels dem bekannten Transformationsverfahren in den HSV-Raum (mit H = Farbwert, S = Sättigung, V = Hellwert) überführt.

Eine Analyse erfolgt zunächst für den H-Kanal (Farbwert). Liegt der betreffende Pixel außerhalb der definierten Schwellenwerte, die a priori bekannt und eingestellt werden, wird der Pixel als "kein Rauch" klassifiziert und zur Verarbeitung des nächsten Pixel eines Bildes übergegangen. Liegt der H-Wert innerhalb der Schwellenwerte, erfolgt eine weitere Analyse in den Kanälen S (Sättigung) und V (Hellwert).

Die Bestimmung der Schwellenwerte erfolgt zunächst auf Grundlage durchgeführter Vorversuche mit manueller Klassifizierung. Im Weiteren werden diese Schwellenwerte für den aktuellen Standort derart überprüft und gegebenenfalls modifiziert, indem eine Anpassung anhand einer Anzahl von Testfeuern durchgeführt wird.

Der neue Schwellenwert $S_{_NEU}$ kann dabei aus dem alten Schwellenwert $S_{_ALT}$ und des während der Tests gefundenen Schwellenwertes $S_{_TEST}$ unter Zugrundelegung eines empirischen Faktors k aus [0,1] mit k reellwertig und k<<1 wie beispielsweise folgt bestimmt werden:

$$S_{_NEU} = (1-k) * S_{_ALT} + k * S_{_TEST} \qquad [1]$$

Eine weitere Möglichkeit der Schwellenwertanpassung besteht darin, dass in Voruntersuchungen jeweils individuelle Schwellenwerte in Abhängigkeit von konkreten Umgebungsbedingungen wie z.B. Lichtverhältnisse (sonnig, bewölkt u. ä.), Tageszeit/Sonnenstand, Jahreszeit, Windverhältnisse ermittelt werden. Je nach konkreter Situation am installierten System können dann mittels geeigneter Sensorik (Uhr, Belichtungsmesser, Windmesser usw.) entsprechende Umgebungsparameter detektiert werden und die vorab ermittelten, individuellen Schwellenwerte eingestellt werden.

Für die beiden anderen Kanäle werden aufgrund der durchgeführten Untersuchungen entsprechende Klassenzuordnungen durchgeführt. Dazu werden für jeden Sättigungswert die Klassen "Rauch", "Wald" sowie "Dunkle Fläche" und für jeden Hellwert die Klassen" Wald", "Rauch" und "Himmel" definiert.

Im Weiteren werden dann konkrete Zahlenwerte als Grad der Zugehörigkeit zu einer bestimmten Klasse festgelegt, d.h. die so genannten Zugehörigkeitsfunktionen für die Einordnung in die entsprechenden Klassen definiert. Die Zugehörigkeitsfunktionen $\mu_A$: $X \rightarrow [0,1]$ ordnen jedem Element der Definitionsmenge X={x}, d.h. dem Sättigungswert bzw. dem Hellwert, eine Zahl aus dem reellwertigen Intervall [0,1] der Zielmenge zu, welche den Zugehörigkeitsgrad $\mu_A(x)$ jedes Elements x zur so definierten unscharfen Menge bzw. Klasse A ("Rauch", "Wald" usw.) angibt. Die konkreten Zahlenwerte für die Zugehörigkeitsfunktionen werden experimentell durch Auswertung einer Vielzahl von Bildern und Szenarien als günstig ermittelt.

Diese Auswertung erfolgt durch Auszählverfahren, Histogramm-Analysen und/oder Bildung entsprechender Polynome zur Approximation der Zugehörigkeitsfunktion zu einer bestimmten Klasse über ein gewisses Intervall des Definitionsbereiches.

Die so ermittelten Werte dienen als Konfigurationsdaten für ein neu zu installierendes Detektionssystem. Diese Zugehörigkeitsfunktionen sind jeweils spezifisch für entsprechende Einsatzszenarien für das Früherkennungssystem (z.B. Kieferwälder in Norddeutschland). Das wird am nachfolgenden Beispiel illustriert, wobei die konkreten Zahlenwerte wie beschrieben aus Testbildern ermittelt wurden.

Figur 3 zeigt die graphische Darstellung der S-Kanal-Analyse. Auf der Abszisse liegen die Sättigungswerte von beispielsweise S 0 bis S 11 und auf der Ordinate ist der Zugehörigkeitsgrad (beispielsweise für Wald, Rauch, Himmel) dargestellt.

Zunächst werden für den S-Kanal (Sättigung) die Funktionswerte wie folgt gebildet, die entsprechenden Werte und Verläufe der Zugehörigkeitsfunktionen sind im Diagramm beispielhaft dargestellt. Ist die Sättigung im Bereich zwischen $S_1$ und $S_2$, wird eine sehr sichere Zuordnung als "Rauch" vorgenommen. Übergangsbereiche, bei denen "Rauch" noch möglich ist, liegen zwischen $S_0$ und $S_4$.

Ist die Sättigung im Bereich zwischen $S_5$ und $S_6$, wird eine sehr sichere Zuordnung als "Wald" vorgenommen. Auch hier gibt es entsprechende Übergangsbereiche zwischen $S_3$ und $S_8$, in denen eine Zuordnung mit abnehmender Sicherheit vorgenommen werden kann. Ist die Sättigung im Bereich zwischen $S_9$ und $S_{10}$, wird eine sehr sichere Zuordnung als "dunkle Fläche" vorgenommen. Übergangsbereiche, bei denen "dunkle Fläche" noch möglich ist, liegen zwischen $S_7$ und $S_{11}$.

Adäquat werden für den V-Kanal ebenfalls entsprechende ZugehörigkeitsFunktionswerte wie folgt gebildet, wobei die beispielhaften Funktionswerte im Diagramm dargestellt sind. Eine graphische Darstellung der V-Kanal-Analyse zeigt die Figur 2. Dabei sind auf der Abszisse die Hellwerte von z. B. $H_0$ bis $H_{10}$ aufgetragen und auf der Ordinate ist der Zugehörigkeitsgrad - beispielsweise für Wald, Rauch oder Himmel - dargestellt.

Die sichere Zuordnung zur Klasse "Wald" ist dabei bei einem Hellwert von $H_1$ möglich. Ist der Hellwert zwischen $H_0$ und $H_3$, kann eine Zuordnung als "Wald" mit geringerer Sicherheit vorgenommen werden, wie dies in Figur 2 schematisch dargestellt ist.

Ist der Hellwert im Bereich zwischen $H_7$ und $H_8$, kann eine Zuordnung als "Rauch" vorgenommen werden, wobei die größte Sicherheit zwischen $H_5$ und $H_6$ liegt. Ist der Hellwert im Bereich zwischen $H_2$ und $H_7$ kann eine Zuordnung als "Rauch" vorgenommen werden, wobei die größte Sicherheit zwischen $H_4$ und $H_5$ liegt. Ist der Hellwert im Bereich zwischen $H_6$ und $H_{10}$, kann eine Zuordnung als "Himmel" vorgenommen werden. Ein detektierter Hellwert zwischen $H_8$ und $H_9$ bietet eine sichere Zuordnung zu dieser Klasse.

Eine weitere Ausgestaltung und Präzisierung dieser Zuordnungsfunktionen kann derart erfolgen, dass bei einer neuen Installation des Detektionssystems zunächst eine Reihe von Testbildern generiert und automatisch ausgewertet werden. Die konkreten Zugehörigkeitsfunktionen können dann anhand dieser Testergebnisse angepasst werden. Das System ist dabei so ausgebildet, dass es sich dabei autonom an den Installationsort anpasst.

Der neue Zugehörigkeitsgrad $\mu_{A_NEU}(x)$ kann dann aus dem alten Zugehörigkeitsgrad $\mu_{A_ALT}(x)$ und dem aus dem Test ermittelten Zugehörigkeitsgrad $\mu_{A_TEST}(x)$ beispielsweise wie folgt ermittelt werden:

$$\mu_{A_NEU}(x) = (1\text{-}k) * \mu_{A_ALT}(x) + k * \mu_{A_TEST}(x) \quad [2]$$

wobei k ein geeignet zu wählender, reellwertiger Koeffizient aus dem Intervall [0,1] ist mit k<<1, der als Maß für die Änderungsrate in Bezug auf die angestrebte Anpassung zu betrachten ist.

Eine weitere Möglichkeit der Anpassung der Zugehörigkeitsfunktion besteht darin, dass in Voruntersuchungen jeweils individuelle Funktionsverläufe in Abhängigkeit von konkreten Umgebungsbedingungen wie z.B. Lichtverhältnisse (sonnig, bewölkt u. ä.), Tageszeit/Sonnenstand, Jahreszeit, Windverhältnisse ermittelt werden. Je nach konkreter Situation am installierten System können dann mittels geeigneter Sensorik (Uhr, Belichtungsmesser, Windmesser usw.) entsprechende Umgebungsparameter detektiert werden und die vorab ermittelten, individuellen Zugehörigkeitsfunktionen eingestellt werden.

Die einzelnen Zugehörigkeitsfunktionen von Sättigung (S-Kanal) und Hellwert V-Kanal) werden zur so genannten Fuzzyfunktion zusammengefasst. Das entsprechende Regelwerk ist über eine Matrix definiert, die die Kombinationen von verschiedenen Klassen und deren konkreten Zugehörigkeitswerten enthält, die dann über qualitative Regeln (Fuzzy-Rules) verknüpft werden. Diese qualitativen Regeln enthalten in komprimierter Form das angesammelte Expertenwissen über tatsächlich aufgetretene Brände aus einer Vielzahl von untersuchten Bildern, die in Bezug auf die benannten Klassen ausgewertet wurden. Alternativ kann dieses Expertenwissen auch über eine Benennung von "if" □ "then"-Regeln erfolgen.

Eine Quantifizierung erfolgt dabei über die Größe der Zugehörigkeitsfunktion wie im Bild dargestellt. Die einzelnen Wichtungsfaktoren aus der Zugehörigkeitsfunktion und entsprechende Zuordnungen sind dabei für eine bestimmte Klasse bzw. Klassenkombination zu bestimmen. Für jede der beschriebenen 3 x 3 = 9 Kombinationen ergeben sich durch diese Fuzzyfizierung entsprechende Maßzahlen, so genannte Fuzzy-Werte.

Damit kann für unterschiedliche Umgebungsbedingungen, je nach Größe der gemessenen Sättigungswerte und Hellwerte ein reellwertiger Ausgangswert der Fuzzyfunktion aus dem Intervall [0,1] ausgegeben werden. Dieser Zahlenwert stellt ein Maß für die Unschärfe der zu treffenden Entscheidung (Rauch ja/nein) dar. Darauf aufbauend erfolgt die Defuzzyfizierung durch die folgende harte Entscheidung: Ist der Ausgangswert größer als ein bestimmter vordefinierter Schwellenwert, wird der Pixel als "Rauch" interpretiert; ansonsten als "kein Rauch".

Abschließend erfolgt eine Summation über die Anzahl aller Pixel, die als "Rauch" interpretiert wurden, innerhalb der gesamten interessierenden Fläche ROI. Falls mindestens eine vordefinierte Gesamtzahl dieser Pixel der betreffenden Region als "Rauch" bestimmt wurden, wird "Rauch" gemeldet und die entsprechende Region als der Bildbereich gekennzeichnet, in dem der Rauch auftritt. Eine Implementierung dieser Verfahren und Algorithmen ist über beliebige Computertechnik durchführbar. Vorteilhaft für einen Operator ist dabei die Darstellung der zu analysierenden Bilder und die Kennzeichnung entsprechend detektierter Rauchgebiete mit geeigneten Mitteln (z.B. Umrandung), um eine visuelle Verifizierung zu erleichtern.

Im Weiteren kann eine Adaptivität der beschriebenen Verfahren und Schwellenwertvergleiche durchgeführt werden, indem eine Rückkopplung in das System eingebracht wird. Dazu sind die Ausgangswerte der Verfahrenslösung mit den tatsächlichen Ergebnissen in Bezug auf einen Brand zu vergleichen. Nach den Prozeduren wie in den Formeln [1] und [2] beschrieben, kann eine laufende Anpassung und Korrektur der Schwellenwerte und Zugehörigkeitsfunktionen bzw. Zugehörigkeitsgrade durchgeführt werden.

## Patentansprüche

**1.** Verfahren zur automatisierten Waldbrandfrüherkennung mittels optischer Detektion von Rauchwolken umfassend die Verfahrensschritte:

- Erzeugen von Bildern mittels mindestens einer digitalen Farbbildkamera und Übermitteln dieser Bilder an ein digitales Datenverarbeitungsmedium;
- manuelles Definieren von Zugehörigkeitsfunktionen in einem Fuzzy-Logik-System zu den Klassen "Rauch", "Wald" und "dunkle Fläche" durch Auswertung einer Vielzahl von durch die Farbbildkamera aufgenommener Testbildern bzw. Testsequenzen in Bezug auf den Sättigungswert (S) und den Hellwert (V) der Bildpixel;
- manuelles Definieren eines Schwellenwertes für die Klassifizierung als "Rauch" durch Auswertung einer Vielzahl von Testbildern bzw. Testsequenzen in Bezug auf den Farbwert (H) der Bildpixel;
- manuelles Definieren eines Fuzzy-Regelwerks für den S-Kanal (Sättigung) und V-Kanal (Hellwert) aufgrund anhand der Vielzahl aufgenommener Testbilder bzw. Testsequenzen durchgeführter Untersuchungen, die dafür die qualitativen Regeln benennen, welche Parameterkombination als "Rauch" gewertet wird;
- Ermitteln von Zugehörigkeitsfunktionen mit konkreten Zahlenwerten für die Einordnung in die entsprechenden Parameterkombinationen für jeden der beiden Kanäle Sättigung (S) und Hellwert (V) anhand einer Vielzahl von Bildern und Szenarien und Zusammenfassen der einzelnen Zugehörigkeitsfunktionen für die Sättigung (S-Kanal) und den Hellwert (V-Kanal) zu einer Fuzzyfunktion,

wobei das entsprechende Regelwerk über eine Matrix definiert ist, die die Kombinationen von verschiedenen Klassen und deren konkreten Zugehörigkeitswerten enthält, die dann über qualitative Regeln (Fuzzy-Rules) verknüpft werden,
wobei eine Quantifizierung dabei über die Größe der Zugehörigkeitsfunktion erfolgt und die einzelnen Wichtigungsfaktoren aus der Zugehörigkeitsfunktion und entsprechende Zuordnungen sind dabei für eine bestimmte Klasse bzw. Klassenkombination bestimmt werden,

- wobei für jede der beschriebenen 3x3 Kombinationen sich durch die Fuzzyfizierung entsprechenden Fuzzy-Werte ergeben,Ermitteln des Schwellenwertes dieser Fuzzyfunktion für die Klassifizierung eines Bildpixels als "Rauch" und Ermittlung des Schwellenwertes für Anzahl derart klassifizierter Bildpixel einer ROI (Region of Interest) anhand einer Vielzahl von Bildern und Szenarien, um einen Brandalarm zu generieren,

gilt folgende Analyse jedes aufgenommenen Bildes:

◦ Einteilen der mit einer digitalen Farbbildkamera aufgenommenen und zu analysierenden Farbbilder in Bereiche, die für die weitere Untersuchung interessant sind (ROI),
◦ Vorklassifizierung dieser potenziellen interessanten Bereiche (ROI) in denen Rauch sein könnte,
◦ hierzu Überführen aller einzelnen Pixel in der ROI in den HSV-Raum (H=Farbwert, S=Sättigung, V=Hellwert) und Analysieren aller Pixel in diesem HSV-Raum,
◦ Analyse der Pixel zunächst für den H-Kanal (Farbwert), Vergleich mit dem Schwellenwert für die Klassifizierung als "Rauch" und Durchführung der folgenden Verfahrensschritte, falls der Schwellenwert überschritten wird und Klassifizierung als "kein Rauch" sowie Analyse des nächsten Bildpixels innerhalb des ROI, falls der Schwellenwert nicht überschritten wird,
◦ Ermitteln der Zugehörigkeitsfunktionswerte für den S-Kanal (Sättigung) und V-Kanal (Hellwert/Farbintensität) in Bezug auf die definierten Klassen,
◦ Bestimmen der Fuzzyfunktion für den Bildpixel, Vergleich mit dem Schwellenwert für die Klassifizierung als "Rauch", falls der Schwellenwert überschritten wird und Klassifizierung als "kein Rauch", falls der Schwellenwert nicht überschritten wird, sowie Übergang zur Analyse des nächsten Bildpixels innerhalb des ROI
◦ Summation der Anzahl aller Bildpixel, der als "Rauch" klassifiziert ROI;
◦ Kennzeichnen der Bildbereiche der als "Rauch" klassifizierten ROI;

◦ Auslösen eines Brandalarms.

2. Verfahren zur automatisierten Waldbrandfrüherkennung mittels optischer Detektion von Rauchwolken nach Anspruch 1, **dadurch gekennzeichnet, dass** die Umgebungsbedingungen des Betriebes permanent ermittelt und in Abhängigkeit davon die Schwellenwerte und Zugehörigkeitsfunktionen adaptiv angepasst und eingestellt werden.

3. Verfahren zur automatisierten Waldbrandfrüherkennung mittels optischer Detektion von Rauchwolken gemäß Anspruch 2, **dadurch gekennzeichnet, dass** durch laufende Auswertung der Ergebnisse des automatischen Verfahrens zur Detektion mit tatsächlichen Brandereignissen und/oder nicht detektierten Brandereignissen die Schwellenwerte und Zugehörigkeitsfunktionen durch eine systemübergreifende Rückkopplung und Neuberechnung adaptiv angepasst werden.

4. Verfahren zur automatisierten Waldbrandfrüherkennung mittels optischer Detektion von Rauchwolken gemäß Anspruch 3, **dadurch gekennzeichnet, dass** zur Vorklassifizierung der potenziellen interessanten Bereiche (ROI), in denen Rauch sein könnte, Verfahren der Georeferenzierung zum Einsatz kommen und die Kameraposition in ihrer räumlichen Lage und Ausrichtung mit Hilfe entsprechender Sensortechnik bestimmt wird und ein Abgleich der Bildbereiche mit entsprechenden topographischen Daten und Geländemodellen dahingehend erfolgt, dass die ROI auf vorab definierte Bereiche eingeschränkt bzw. entsprechende Bereiche ausgeschlossen werden, sowie zur Definition von Gebietsklassen genutzt werden.

5. Verfahren zur automatisierten Waldbrandfrüherkennung mittels optischer Detektion von Rauchwolken nach Anspruchs 4, **dadurch gekennzeichnet, dass** die Implementierung des Verfahrens und deren Algorithmen über mindestens ein digitales Datenverarbeitungsmedium erfolgt.

6. Verfahren zur automatisierten Waldbrandfrüherkennung nach Anspruch 5, **dadurch gekennzeichnet, dass** die zu analysierenden Bilder auf mindestens einen, mit dem digitalen Datenverarbeitungsmedium verbundenen, Bildschirm wiedergegeben werden und die Kennzeichnung entsprechend detektierter Rauchgebiete mit geeigneten Mitteln erfolgt.

7. Verfahren gemäß Anspruch 6, **dadurch gekennzeichnet, dass** die geeigneten Mittel eine Umrandung, eine farbliche Hinterlegung oder eine stilistische Markierung der detektierten Rauchgebiete sind.

8. Verfahren gemäß einem oder mehreren der vorstehenden Ansprüche 6 und 7, **dadurch gekennzeichnet, dass** das digitale Datenverarbeitungsmedium und der Bildschirm mittels mindestens einer Funkdatenverbindung miteinander koppelbar sind, wobei der Bildschirm einem Mobilfunktelefon oder einem Tablet-PC zugeordnet ist, die für den Empfang und die Verarbeitung der von dem digitalen Datenverarbeitungsmedium generierten Datensätzen ausgebildet sind.

## Claims

1. Procedure for the automated early detection of forest fires through the visual detection of smoke clouds, comprising the following procedural steps:

- Generation of images by means of at least one digital colour camera and transmission of these images to a digital data processing medium;
- Manual definition of membership functions in a fuzzy logic system to the classes 'smoke', 'forest' and 'dark area' by evaluating a multitude of test images or test sequences captured by the digital colour camera with regard to the saturation value (S) and the brightness value (V) of the image pixels;
- Manual definition of a threshold value for classification as 'smoke' by evaluating a multitude of test images or test sequences in relation to the colour value (H) of the image pixels;
- Manual definition of a fuzzy set of rules for the S channel (saturation) and the V channel (brightness) based on a multitude of test images or test sequences carried out, which specify the qualitative rules for determining which parameter combination is evaluated as 'smoke';
- Determination of membership functions with specific numerical values for classification into the corresponding parameter combinations for both the saturation channel (S) and the brightness channel (V) based on a multitude of images and scenarios and the combination of the individual membership functions for saturation (S channel) and brightness (V channel) into a fuzzy function,

wherein the corresponding set of rules is defined using a matrix containing the combinations of various classes and their specific membership values, which are then linked via qualitative rules (fuzzy rules),
wherein quantification takes place via the size of the membership function and the individual weighting factors from the membership function and corresponding allocations are determined for a certain class or class combination,

- wherein for each of the aforesaid 3x3 combinations fuzzification results in corresponding fuzzy values. For determining the threshold value of this fuzzy function for the classification of an image pixel as 'smoke' and determination of the threshold value for the number of such classified image pixels of an ROI (Region of Interest) based on a multitude of images and scenarios in order to generate a fire alarm,

the following analysis of each captured image applies:

◦ Classification of the colour images (to be analysed) captured with a digital colour camera into ROIs (Regions of Interest) that are interesting for further investigation,
◦ Pre-classification of these potentially interesting ROIs (Regions of Interest) where there could be smoke,
◦ To do so, transfer of all individual pixels in the ROI into the HSV space (H=colour value, S=saturation, V=brightness) and analysis of all pixels in this HSV space,
◦ Analysis of the pixels initially for the H channel (colour value), comparison with the threshold value for classification as 'smoke' and performance of the following procedural steps if the threshold value is exceeded, and classification as 'no smoke' and analysis of the next image pixel within the ROI if the threshold value is not exceeded,
◦ Determination of the membership function values for the S channel (saturation) and the V channel (brightness/colour intensity) in relation to the defined classes,
◦ Determination of the fuzzy function for the image pixel, comparison with the threshold for classification as 'smoke' if the threshold is exceeded, and classification as 'no smoke' if the threshold value is not exceeded and transition to analysis of the next image pixel within the ROI
◦ Summation of the number of all image pixels for the ROI classified as 'smoke';
◦ Identification of the image areas of the ROI classified as 'smoke';
◦ Activation of a fire alarm.

**2.** Procedure for the automated early detection of forest fires through the visual detection of smoke clouds according to claim 1, **characterised in that** the environmental conditions of operation are permanently determined and, as a function thereof, the threshold values and membership functions are adaptively adapted and set.

**3.** Procedure for the automated early detection of forest fires through the visual detection of smoke clouds according to claim 2, **characterised in that** by continuously evaluating the results of the automatic procedure for detection with actual fire events and/or undetected fire events, the threshold values and membership functions are adaptively adapted through cross-system feedback and recalculation.

**4.** Procedure for the automated early detection of forest fires through the visual detection of smoke clouds according to claim 3, **characterised in that** geo-referencing methods are used to pre-classify the potential ROIs (Regions of Interest) in which smoke could be present, and the spatial position and orientation of the camera position is determined with the aid of corresponding sensor technology, and the image areas are compared with corresponding topographic data and terrain models in such a way that the ROIs are restricted to predefined regions or corresponding regions are excluded, and are used to define region classes.

**5.** Procedure for the automated early detection of forest fires through the visual detection of smoke clouds according to claim 4, **characterised in that** the implementation of the procedure and its algorithms takes place via at least one digital data processing medium.

**6.** Procedure for the automated early detection of forest fires through the visual detection of smoke clouds according to claim 5, **characterised in that** the images to be analysed are displayed on at least one screen connected to the digital data processing medium and that the identification of correspondingly detected smoke regions is carried out by suitable means.

**7.** Procedure according to claim 6, **characterised in that** the suitable means are a border, a coloured background or a stylistic marking of the detected smoke regions.

8. Procedure according to one or more of the aforesaid claims 6 and 7, **characterised in that** the digital data processing medium and the screen can be coupled to one another through at least one wireless data connection, with the screen being assigned to a mobile phone or a tablet PC which are designed to receive and process the data records generated by the digital data processing medium.

## Revendications

1. Procédé de détection rapide automatisée d'incendies de forêt au moyen d'une détection optique de nuages de fumée, ledit procédé comprenant les étapes suivantes :

   - la production d'images au moyen d'une caméra couleur numérique et le transfert desdites images à un support de traitement de données numérique ;
   - la définition manuelle de fonctions d'appartenance dans un système de logique floue à des classes « fumée », « forêt » et « surface sombre » par évaluation d'une pluralité d'images de test ou de séquences de test enregistrées par la caméra couleur par rappprt à la saturation (S) et la luminosité (V) des pixels d'image ;
   - la définition manuelle d'une valeur seuil pour la classification en « fumée » par évaluation d'une pluralité d'images de test ou de séquences de test prises par rapport à la teinte (H) des pixels d'image ;
   - la définition manuelle d'un système de logique floue pour le canal S (saturation) et le canal V (luminosité) en fonction des analyses réalisées à partir de la pluralité d'images de test ou de séquences de test enregistrées, lesdites analyses désignant dans ce but les règles qualitatives déterminant quelle combinaison de paramètres est évaluée en tant que « fumée »,
   - la détermination de fonctions d'appartenance avec des valeurs numériques concrètes pour la classification dans les combinaisons de paramètres correspondantes pour chacun des deux canaux saturation (S) et luminosité (V) à l'aide d'une pluralité d'images et de scénarios et regroupement de toutes les fonctions d'appartenance pour la saturation (canal S) et la luminosité (canal V) en une fonction floue ;

   dans lequel le système de logique correspondant est défini par une matrice contenant les combinaisons des différentes classes et leurs valeurs concrètes d'appartenance, qui sont ensuite liées par des règles qualitatives (règles floues),
   dans lequel une quantification intervient par le biais de la taille de la fonction
   d'appartenance et les différents facteurs importants de la fonction d'appartenance et dans lequel les répartitions correspondantes sont déterminées pour une classe ou une combinaison de classes précise,

   - selon laquelle, pour chacune des combinaisons 3 x 3 décrites, des valeurs floues correspondantes résultent de la fuzzyfication ; pour la détermination de la valeur seuil de cette fonction floue à des fins de classification d'un pixel d'image en « fumée » et pour la détermination de la valeur seuil pour le nombre de pixels d'image d'une ROI (région of interest ou région d'intérêt) ainsi classée sur la base d'une pluralité d'images et de scénarios dans le but de déclencher une alarme incendie,

   l'analyse ci-après s'applique à chaque image enregistrée :

   ◦ répartition des images couleur enregistrées avec une caméra couleur numérique et à analyser en zones d'intérêt pour une analyse plus approfondie (ROI) ;
   ◦ pré-classification de ces zones d'intérêt potentielles (ROI) susceptibles de contenir de la fumée ;
   ◦ dans ce but, transfert de chaque pixel contenu dans la ROI vers l'espace HSV (H = teinte, S = saturation, V = valeur ou luminosité) et analyse de tous les pixels de cet espace HSV ;
   o analyse des pixels pour le canal H (teinte) dans un premier temps, comparaison avec la valeur seuil pour la classification en « fumée » et mise en œuvre des étapes de procédé suivantes en cas de dépassement de la valeur seuil et classification en « pas de fumée », ainsi qu'analyse du pixel d'image suivant dans la ROI en cas de non-dépassement de la valeur seuil ;
   o détermination des valeurs des fonctions d'appartenance pour le canal S (saturation) et le canal V (luminosité/intensité de la couleur) par rapport aux classes définies ;
   o détermination de la fonction floue pour le pixel d'image, comparaison avec la valeur seuil pour la classification en « fumée » en cas de dépassement de la valeur seuil et classification en « pas de fumée » en cas de non-dépassement de la valeur seuil, ainsi que passage à l'analyse du pixel d'image suivant dans la ROI ;
   o totalisation de tous les pixels d'image de la ROI classée en « fumée » ;
   o identification des zones d'image de la ROI classée en «fumée» ;

o déclenchement d'une alarme incendie.

2. Procédé de détection rapide automatisée d'incendies de forêt au moyen d'une détection optique de nuages de fumée selon la revendication 1, **caractérisé en ce que** les conditions environnementales de fonctionnement sont évaluées en permanence et les valeurs seuils et les fonctions d'appartenance sont ajustées et réglées de manière adaptative en fonction desdites conditions.

3. Procédé de détection rapide automatisée d'incendies de forêt au moyen d'une détection optique de nuages de fumée selon la revendication 2, **caractérisé en ce que** les valeurs seuils et les fonctions d'appartenance sont ajustées de manière adaptative par le biais d'un feedback et d'un recalcul croisés, au travers d'une évaluation continue des résultats du procédé automatique de détection d'incendies réels et/ou d'incendies non détectés.

4. Procédé de détection rapide automatisée d'incendies de forêt au moyen d'une détection optique de nuages de fumée selon la revendication 3, **caractérisé en ce que** pour la préclassification des zones d'intérêt potentielles (ROI) dans lesquelles pourrait se trouver de la fumée, des méthodes de géoréférencement sont utilisées, la position de la caméra est déterminée dans sa localisation spatiale et dans son orientation à l'aide d'une technologie de capteurs adaptée et les zones d'image sont comparées avec des données topographiques et des modèles de terrain correspondants de telle sorte que les ROI sont limitées à des zones préalablement définies ou des zones correspondantes sont exclues et sont utilisées pour définir des classes de zones.

5. Procédé de détection rapide automatisée d'incendies de forêt au moyen d'une détection optique de nuages de fumée selon la revendication 4, **caractérisé en ce que** la mise en œuvre du procédé et de ses algorithmes s'effectue par le biais d'au moins un support de traitement de données numérique.

6. Procédé de détection rapide automatisée d'incendies de forêt selon la revendication 5, **caractérisé en ce que** les images à analyser s'affichent sur au moins un écran connecté au support de traitement de données numérique et les zones de fumée ainsi détectées sont identifiées à l'aide de moyens appropriés.

7. Procédé selon la revendication 6, **caractérisé en ce que** les moyens appropriés consistent en un tracé des bordures, l'ajout d'un fond coloré ou un marquage stylistique des zones de fumée détectées.

8. Procédé selon une ou plusieurs des revendications 6 et 7, **caractérisé en ce que** le support de traitement des données numérique et l'écran peuvent être couplés l'un à l'autre au moyen d'au moins une connexion de données radio, l'écran étant apparié à un téléphone mobile ou une tablette PC destiné(e) à recevoir et à traiter les ensembles de données générés par le support de traitement des données numérique.

Fig. 1

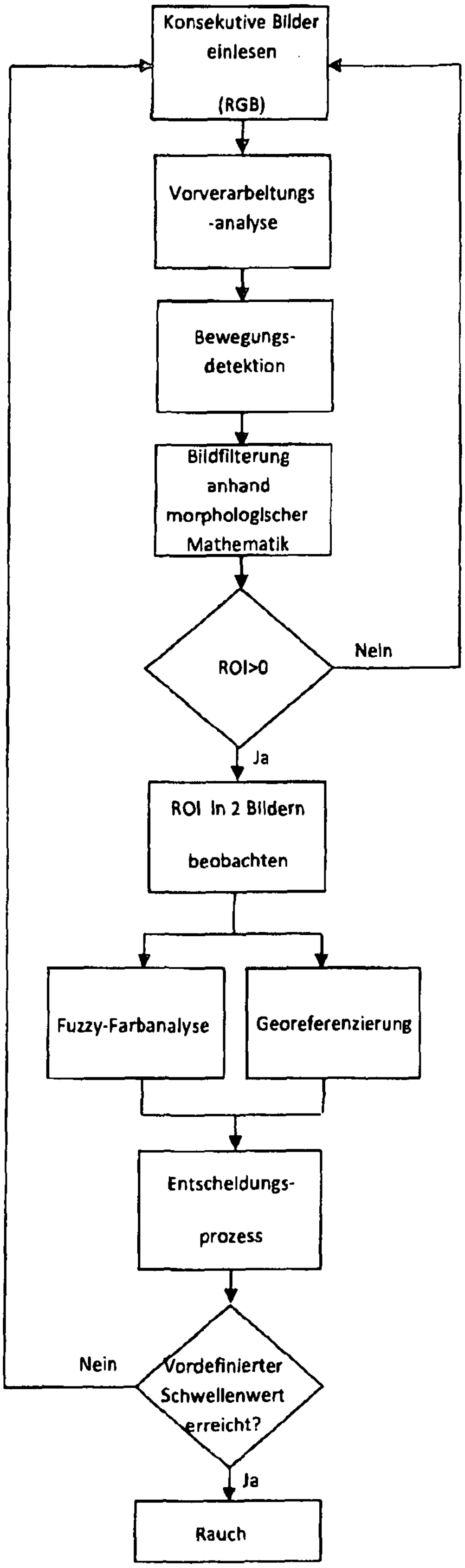
Konsekutive Bilder einlesen
(RGB)
Vorverarbeitungs -analyse
Bewegungs- detektion
Bildfilterung anhand morphologischer Mathematik
ROI>0
Nein
Ja
ROI in 2 Bildern
beobachten
Fuzzy-Farbanalyse
Georeferenzierung
Entscheidungs-
prozess
Vordefinierter Schwellenwert erreicht?
Nein
Ja
Rauch

Fig. 2

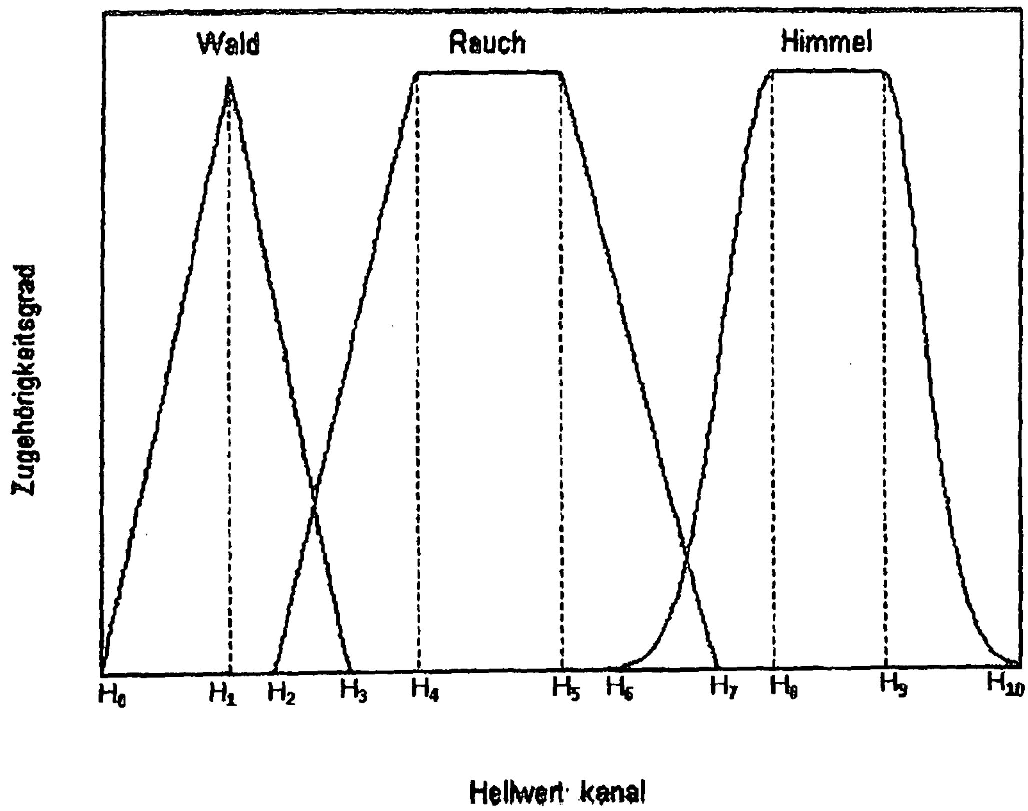
Wald
Rauch
Himmel
Zugehörigkeitsgrad
$H_0$
$H_1$
$H_2$
$H_3$
$H_4$
$H_5$
$H_6$
$H_7$
$H_8$
$H_9$
$H_{10}$
Hellwert kanal

Fig. 3

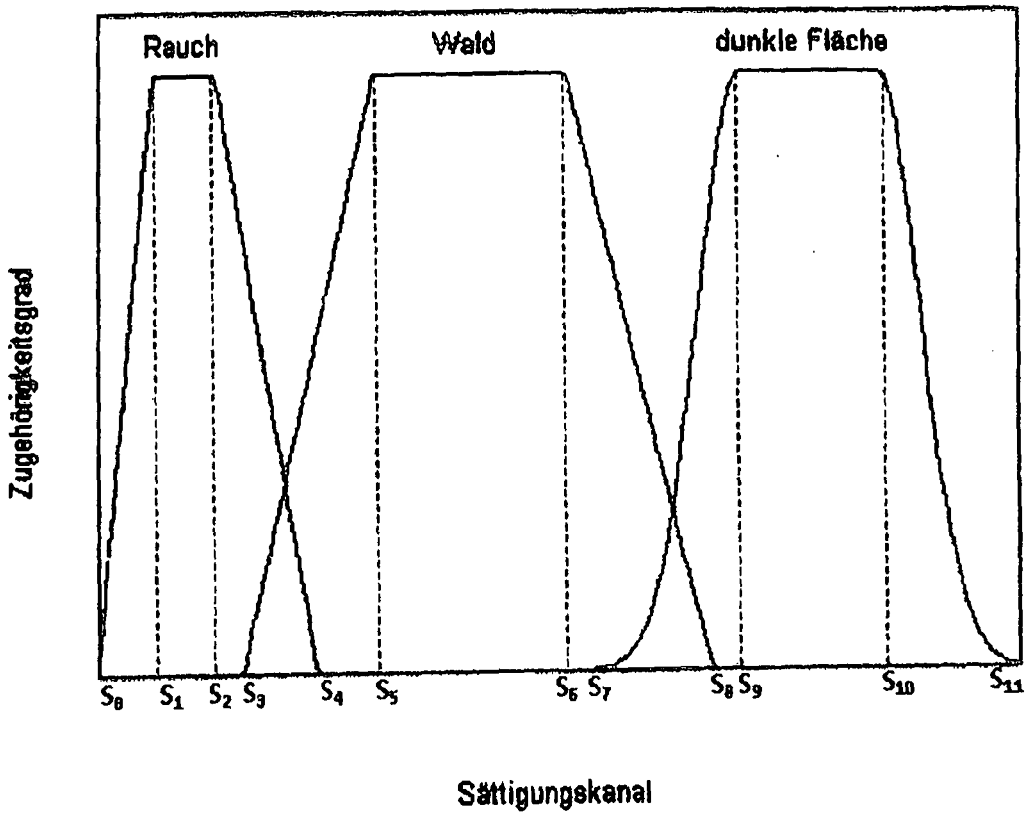
Rauch
Wald
dunkle Fläche
Zugehörigkeitsgrad
S0 S1 S2 S3 S4 S5 S6 S7 S8 S9 S10 S11
Sättigungskanal

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 7542585 B2
- DE 102009048739 B3
- EP 1994502 B1
- EP 1628260 B1
- US 6937743 B2
- US 2013094699 A1
- US 2006115154 A1
- US 4614968 A

### In der Beschreibung aufgeführte Nicht-Patentliteratur

- Vision based forest smoke detection using analyzing of temporal patterns of smoke and their probability models. **HAM SUNJYAE et al.** Image processing machine vision applications IV. SPIE, 10. Februar 2011, vol. 7877
- An intelligent system for false alarm reduction in infrared forest-fire detection. **ARRUE B C et al.** IEEE Intelligence Systems. IEEE Service Center